# EUROPÄISCHE PATENTANMELDUNG

(11) **EP 2 719 622 A2**
(43) Veröffentlichungstag der Anmeldung: **16.04.2014**
(21) Anmeldenummer: 13187510.6
(22) Anmeldetag: 07.10.2013
(51) Int. Cl.: B64D 11/06

(54) **Flugzeugsitz**

(30) Priorität: 09.10.2012 DE 102012109597
(71) Anmelder: Loher, Roland, 94522 Wallersdorf-Haidlfing (DE)
(72) Erfinder: Loher, Roland, 94522 Wallersdorf-Haidlfing (DE)
(74) Vertreter: advotec.

(57) **Zusammenfassung**

Flugzeugsitz (1) mit einem Sitzelement, welches ein flexibles Material aufweisendes und die Sitzfläche (6) bildendes Sitzkissen (2) umfasst, dadurch gekennzeichnet, dass im Bereich der linken oder rechten Hälfte (8, 9) des Sitzkissens (2) oder im Bereich beider Hälften (8, 9) des Sitzkissens unabhängig voneinander die Sitzhöhe mittels Einbringen von Medium in das Sitzelement und/oder Ablassen von Medium aus dem Sitzelement veränderbar ist.

## Beschreibung

Die vorliegende Erfindung betrifft einen Flugzeugsitz mit einem die Sitzfläche bildenden Sitzelement, welches mindestens ein flexibles Material aufweisendes Sitzkissen umfasst.

Derartige Flugzeugsitze sind aus dem Stand der Technik bekannt. Das Sitzelement umfasst in der Regel ein mit Schaumstoff gefülltes Sitzkissen, sowie ein Trägerelement, wie beispielsweise eine Hartkunststoffschale, an welcher das Sitzkissen mit seiner Unterseite fixiert ist. Die Oberseite des Sitzkissens bildet die Sitzfläche. Das Sitzkissen weist in der Regel einen Bezug aus Leder oder Stoff auf.

Hat ein Passagierflugzeug seine Flughöhe erreicht und ist im Geradeausflug, ist das Passagierflugzeug um ca. 3° angestellt, d.h., dass die Längsachse des Passagierflugzeugs mit der Horizontalen einen Winkel α von ca. 3° einschließt. Eine derartige Anstellung um 3° ist bei herkömmlichen Passagierflugzeugen kein Problem, da in der Regel sämtliche Flugzeugsitze in Flugrichtung positioniert sind, d.h., dass die Blickrichtung der Passagiere der Flugrichtung entspricht und die Passagiere lediglich etwas nach hinten geneigt sitzen. Eine derartige Sitzposition ist jedoch nicht unbequem.

Anders verhält es sich dagegen bei Flugzeugen, in welchen die Passagiere auch schräg zur Flugrichtung sitzen. Dies ist beispielsweise dann der Fall, wenn sich im Flugzeug größere Konferenztische befinden, deren Längsachse parallel zur Längsachse des Flugzeugs verläuft und Passagiere an den Längsseiten des Tisches sitzen. Derartige Tisch- und Sitzanordnungen findet man beispielsweise in sogenannten VIP-Flugzeugen. Im Extremfall sitzt ein Passagier in derartigen Flugzeugen so positioniert, dass die Blickrichtung mit der Flugrichtung in etwa einen 90°-Winkel einschließt. Bei einer derartigen Sitzposition ist der Fluggast einer seitlichen Schräglage von ca. 3° ausgesetzt, was insbesondere bei längeren Flügen äußerst unangenehm ist.

Der vorliegenden Erfindung liegt die Aufgabe zugrunde, einen Flugzeugsitz zur Verfügung zu stellen, welcher die oben genannten Nachteile der Flugsitze aus dem Stand der Technik überwindet.

Diese Aufgabe wird gelöst durch einen Flugsitz der eingangs genannten Art, welcher dadurch gekennzeichnet ist, dass im Bereich der linken oder rechten Hälfte des Sitzkissens oder im Bereich beider Hälften des Sitzkissens unabhängig voneinander die Sitzhöhe mittels Einbringen und/oder Ablassen von Medium in das bzw. aus dem Sitzelement veränderbar ist.

Unter linker Hälfte des Sitzkissens wird derjenige Bereich des Sitzkissens verstanden, auf dem beim Sitzen i. d. R. die linke Gesäßhälfte positioniert ist. Unter rechter Hälfte des Sitzkissens wird derjenige Bereich des Sitzkissens verstanden, auf dem beim Sitzen i. d. R. die rechte Gesäßhälfte positioniert ist.

Bei Flugzeugsitzen, die bereits fest in einer seitlichen Stellung montiert sind, ist es ausreichend, wenn lediglich im Bereich einer Sitzflächenhälfte eine Höhenverstellung möglich ist. In der Regel ist es jedoch so, dass die Flugzeugsitze flexibel positioniert werden können und es nicht festgelegt ist, ob der Fluggast mit Blick zur rechten oder linken Fensterreihe sitzt. In diesem Fall ist es äußerst vorteilhaft, wenn beide Sitzflächenhälften höhenverstellbar sind.

Bei dem Medium kann es sich beispielsweise um Flüssigkeiten oder gelartige Verbindungen handeln. Vorzugsweise handelt es sich bei dem Medium jedoch um ein gasförmiges Medium, besonders bevorzugt um Luft. Die Verwendung von Luft hat diverse Vorteile, wie beispielsweise einen einfachen Aufbau der Gesamtkonstruktion, niedrige Kosten sowie ein unkompliziertes Handling.

Bei dem erfindungsgemäßen Flugzeugsitz ist ein asymmetrisches Einbringen bzw. Ausbringen von Medium in bestimmte Zonen des Sitzelementes möglich. Hierdurch wird erreicht, dass in unterschiedlichen Zonen des Sitzelements, insbesondere des Sitzkissens unterschiedliche Drücke erzeugbar sind. Durch die unterschiedlichen Drücke wird i. d. R. eine unterschiedliche Verdichtung des im Sitzkissen befindlichen flexiblen Materials erreicht. Dies bewirkt wiederum unterschiedliche Sitzhöhen in den unterschiedlichen Zonen, insbesondere in der linken und rechten Hälfte des Sitzkissens (bzw. der Sitzfläche), durch unterschiedlich starkes Anheben bzw. Absenken der Sitzflächenzonen. Hierdurch wird erreicht, dass die gesamte Sitzfläche auch während des Fluges nach dem Neigungsausgleich im Wesentlichen horizontal ausgerichtet ist, sodass der Fluggast bei seitlicher Sitzposition (Blickrichtung beispielsweise im 90°-Winkel zur Flugrichtung) nicht mehr auf eine Seite geneigt sitzen muss.

Bei einer bevorzugten Ausführungsform des erfindungsgemäßen Flugzeugsitzes sind im oder unter dem Sitzkissen (z. B. zwischen Trägerelement und Sitzkissen) mindestens ein, vorzugsweise zwei mit Medium, insbesondere Luft befüllbare und/oder absaugbare Neigungsausgleichskissen angeordnet, welche vorzugsweise im Bereich der linken bzw. rechten Hälfte des Sitzkissens positioniert sind. Durch derartige Neigungsausgleichskissen, welche im Sitzelement integriert sind, ist eine besonders effektive Verstellung der Sitzhöhen in den jeweiligen Zonen des Sitzkissens möglich. In der Regel enthalten die Neigungsausgleichskissen ein flexibles Material, vorzugsweise Schaumstoff, wobei das flexible Material vorzugsweise mit einem luftdichten Material, welches ebenfalls flexibel ausgebildet ist (z.B. flexibler Kunststoff, Gummi etc.) umschlossen ist.

Vorzugsweise weist bzw. weisen das bzw. die Neigungsausgleichskissen jeweils einen Pneumatikanschluss zum Absaugen und/oder Einbringen von Luft auf. Dieser Pneumatikanschluss kann mit einer Vakuumpumpe verbunden sein, mit Hilfe derer Luft aus dem jeweiligen Neigungsausgleichskissen gesogen werden kann.

In der Regel ist das flexible Material des Sitzkissens Kunststoffschaum (Schaumstoff). Ein derartiges Material ist besonders gut geeignet, um die Sitzhöhe durch Anheben der Sitzfläche zu erhöhen bzw. anschließend wieder zu senken.

Das Ein- bzw. Ausbringen von Medien kann manuell (z.B. über Tastatur) erfolgen. Bei einer bevorzugten Weiterbildung des erfindungsgemäßen Flugzeugsitzes wird das Absaugen und/oder Einbringen von Medien automatisch gesteuert, wobei vorzugsweise Sensoren im Sitz angeordnet sind, welche die Stellung, insbesondere Drehstellung des Sitzes erkennen. Erkennen die Sensoren während des Fluges eine bestimmte Stellung des Sitzes, bei der der Fluggast nicht in Flugrichtung (oder entgegen der Flugrichtung) sitzt, sondern eine seitliche Sitzposition einnimmt, werden automatisch die jeweiligen, für den Sitzausgleich verantwortlichen Ventile zum Absaugen oder Einbringen von Medium angesteuert (siehe auch Figurenbeschreibung). Bei einer weiteren bevorzugten Ausführungsform erkennen die Sensoren auch, wenn sich das Flugzeug nicht mehr im Geradeausflug befindet, sondern beispielsweise im Sinkflug ist oder bereits wieder den Boden erreicht hat. In diesem Falle werden wiederum die entsprechenden Ventile zum Absaugen bzw. Einbringen von Medium angesteuert.

Die vorliegende Erfindung betrifft ferner ein Verfahren zum Ausgleich einer durch den Anstellwinkel eines Flugzeugs während eines Fluges hervorgerufenen schiefen Sitzposition bei seitlicher Sitzstellung, wobei mittels Einbringen und/oder Ablassen von Medium in ein bzw. aus einem Sitzelement des Flugzeugsitzes in einem linken Bereich der Sitzfläche des Flugzeugsitzes eine andere Sitzhöhe als in einem rechten Bereich erzeugt wird. Dadurch wird wiederum erreicht, dass in einem linken Bereich des Sitzkissens des Flugzeugsitzes eine andere (angepasste) Sitzhöhe als im rechten Bereich eingestellt wird (unter Sitzhöhe wird in diesem Zusammenhang der Abstand zwischen der Sitzfläche und dem Flugzeugboden verstanden). Dies führt wiederum letztendlich dazu, dass die gesamte Sitzfläche in eine im Wesentlichen horizontale Position gebracht wird. Unter seitlicher Sitzstellung wird wiederum eine solche Sitzstellung verstanden, bei der der Fluggast nicht mit Blickrichtung in Flugrichtung, sondern beispielsweise mit Blickrichtung zur linken oder rechten Längsseite des Flugzeuges sitzt.

Bei einer bevorzugten Verfahrensvariante des erfindungsgemäßen Verfahrens ist in einem linken Bereich der Sitzfläche und/oder einem rechten Bereich der Sitzfläche jeweils ein Neigungsausgleichskissen angeordnet, wobei aus demjenigen Neigungsausgleichskissen, welches sich in Flugrichtung befindet, Medium, insbesondere Luft abgesaugt wird. Auch ist es möglich, in das andere Neigungsausgleichskissen Medium einzubringen, um einen Neigungsausgleich zu schaffen.

Mit Vorteil erfolgt der Ausgleich des Anstellwinkels automatisch, indem die Sitzstellung durch Sensoren detektiert wird und je nach Sitzstellung entweder die linke oder die rechte Sitzhälfte bzw. das linke oder rechte Neigungsausgleichskissen angesteuert wird. Insbesondere wird bei dieser Verfahrensvariante jeweils ein Ventil angesteuert, welches mit dem linken bzw. rechten Neigungsausgleichskissen in Verbindung steht und Medium, insbesondere Luft in das bzw. aus dem jeweiligen Neigungsausgleichskissen heraus- bzw. hineinbringen kann.

Weitere Merkmale des Gegenstandes der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: ein Passagierflugzeug im Geradeausflug;
- Fig. 2:: eine Draufsicht auf ein Sitzelement eines erfindungsgemäßen Flugzeugsitzes;
- Fig. 3:: einen Schnitt entlang der Linie A-A von Fig. 1;
- Fig. 4:: eine perspektivische Darstellung des Sitzkissens von Fig. 2.
- Fig. 5a,5b:: einen Schnitt durch ein weiteres Sitzkissen eines erfindungsgemäßen Flugzeugsitzes

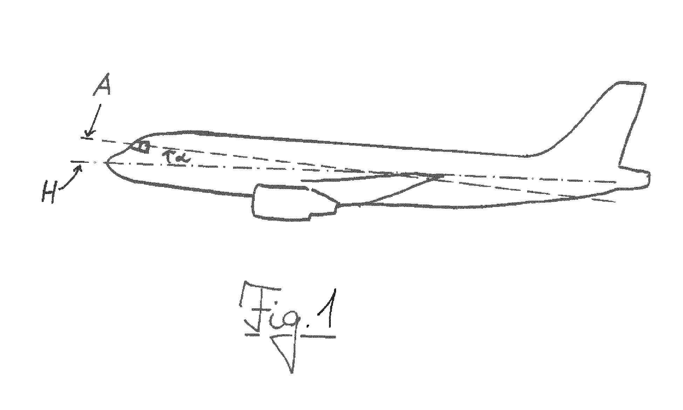

Figur 1 zeigt ein Passagierflugzeug im Geradeausflug, welches aufgrund seiner aerodynamischen Konstruktion um einen Winkel α von 3° angestellt. In der Figur 1 sind die Horizontale H und die Längsachse A des Flugzeugrumpfes, die miteinander den Winkel α einschließen, eingezeichnet.

Diejenigen Passagiere, welche beispielsweise mit Blick aus dem Fenster sitzen (schräge Sitzstellung), sitzen bei den herkömmlichen Flugzeugsitzen in einer schiefen Sitzposition in ihren Flugzeugsitzen, was nicht komfortabel ist.

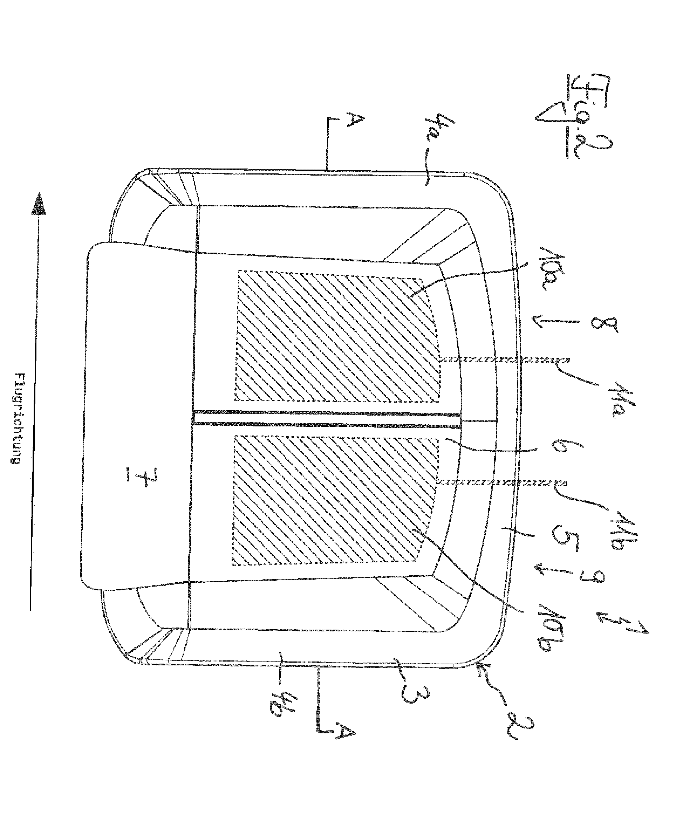

Figur 2 zeigt eine Draufsicht auf einen erfindungsgemäßen Flugzeugsitz 1, bei dem jedoch die Rückenlehne sowie die Armlehnen aus Übersichtsgründen weggelassen wurden und lediglich das Sitzkissen 2 des Sitzelementes zu sehen ist. Das Sitzelement umfasst neben dem Sitzkissen 2 auch eine Trägerschale aus Kunststoff (hier nicht dargestellt), welche das Sitzkissen 2 trägt. Das Sitzkissen 2 zeigt einen wulstförmigen, nicht geschlossenen Rahmen 3, welcher zwei Seitenabschnitte 4a und 4b sowie einen Rückseitenabschnitt 5 umfasst. Der Rahmen 3 des Sitzkissens 2 umgibt die Sitzfläche 6 des Sitzkissens 2 und überragt diese. Die Sitzfläche 6 geht im vorderen Bereich des Sitzkissens in eine nach unten abbiegende vordere Randbegrenzung 7 über, welche ein komfortables Sitzen ermöglicht, da sich die rundliche Form des Abschnitts 7 an die Anatomie eines Fluggastes, insbesondere an einen Bereich des Übergangs vom Ober- in den Unterschenkel optimal anpasst.

Im Bereich der rechten Hälfte 8 (von einem sitzenden Fluggast aus gesehen) sowie im Bereich der linken Hälfte 9 des Sitzkissens 2 ist jeweils ein Neigungsausgleichskissen 10a und 10b in das Sitzkissen 2 integriert. Die beiden Neigungsausgleichskissen 10a und 10b weisen jeweils einen Pneumatikanschluss 11a und 11b auf, welche nach hinten aus dem Sitzkissen 2 heraustreten und dort mit einer - hier nicht dargestellten-Vakuumpumpe in Verbindung stehen. Mit Hilfe der Vakuumpumpe können die beiden Ausgleichskissen 10a und 10b unabhängig voneinander abgesaugt bzw. aufgepumpt werden.

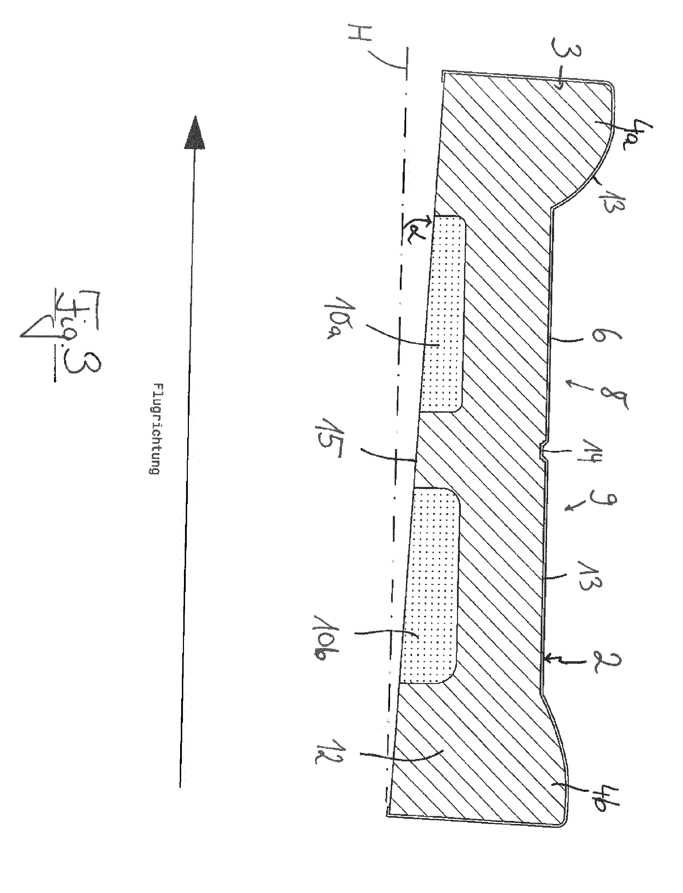

Figur 3 zeigt einen Längsschnitt durch das Sitzkissen 2 von Figur 1 (entlang der Linie A-A). Das Sitzkissen 2 enthält Schaumstoff 12 und weist einen Lederbezug 13 auf. In dieser Darstellung sind auch die Seitenbereiche 4a und 4b des wulstförmigen Rahmens 3 zu sehen, welche die Sitzfläche 6 umgeben und diese überragen, wobei der Rahmen 3 direkt in die Sitzfläche 6 übergeht Eine Mittelnaht 14 teilt die Sitzfläche 6 in eine rechte Hälfte 8 und eine linke Hälfte 9. Der Boden 15 des Sitzkissens 2 ist fest mit einer hier nicht dargestellten Trägerschale, welche ebenfalls Bestandteil des Sitzelementes ist, verbunden.

In Figur 3 ist die Situation während eines Geradeausflugs dargestellt. Der Boden 15 des Sitzkissens 2 ist um ca. 3° angestellt, was dem Anstellwinkel beim Fliegen entspricht. Die Neigungsausgleichskissen 10a und 10b sind im unteren Bereich des Sitzkissens 2 in dieses integriert. Beide Neigungsausgleichskissen sind mit Schaumstoffund Luft gefüllt.

Bei der in Figur 3 dargestellten Situation wurde aus dem in Flugrichtung befindlichen Ausgleichskissen 10a Luft abgesaugt (in Flugrichtung bedeutet, näher am Cockpit des Flugzeuges positioniert). Das Ausgleichskissen 10b wurde dagegen nicht abgesaugt. Durch das Absaugen des Ausgleichskissens 10a wurde erreicht, dass sich die Sitzfläche 6 im Bereich der rechten Hälfte 8 des Sitzkissens 2 etwas abgesenkt hat, wodurch der Abstand zwischen der Sitzfläche 6 und dem Boden 15 in der rechten Hälfte 8 des Sitzkissen 2 abgenommen hat. Hierdurch wurde erreicht, dass die gesamte Sitzfläche 6 in eine insgesamt annähernd horizontale Position gebracht wurde. Dadurch wurde wiederum erreicht, dass der auf dem Sitzkissen sitzende Fluggast in einer geraden und aufrechten Position sitzt, obwohl der Anstellwinkel von 3° natürlich noch vorhanden ist.

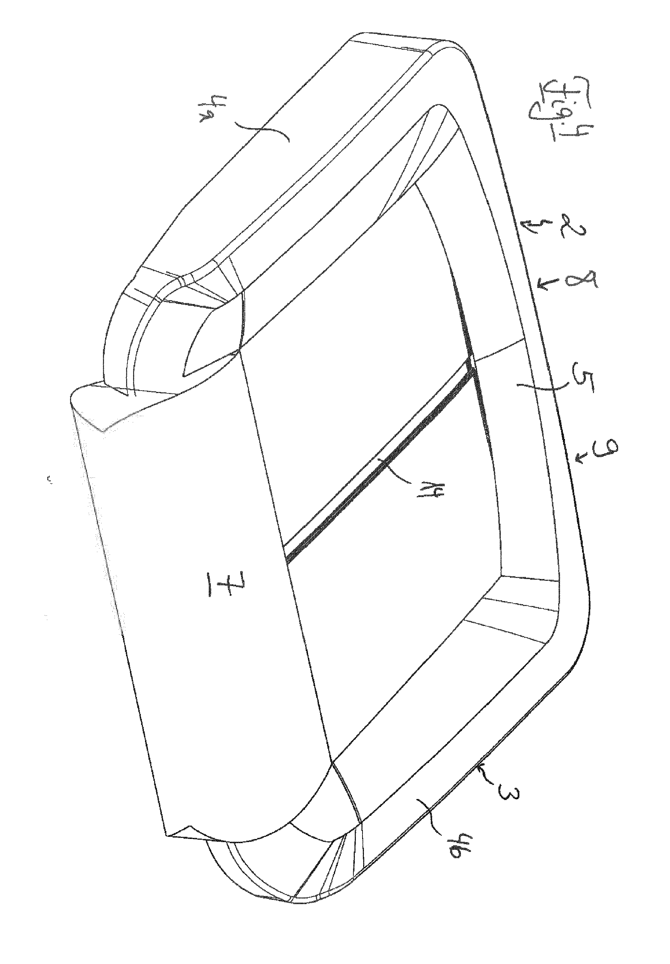

Figur 4 zeigt eine perspektivische Darstellung des Sitzkissens 2.

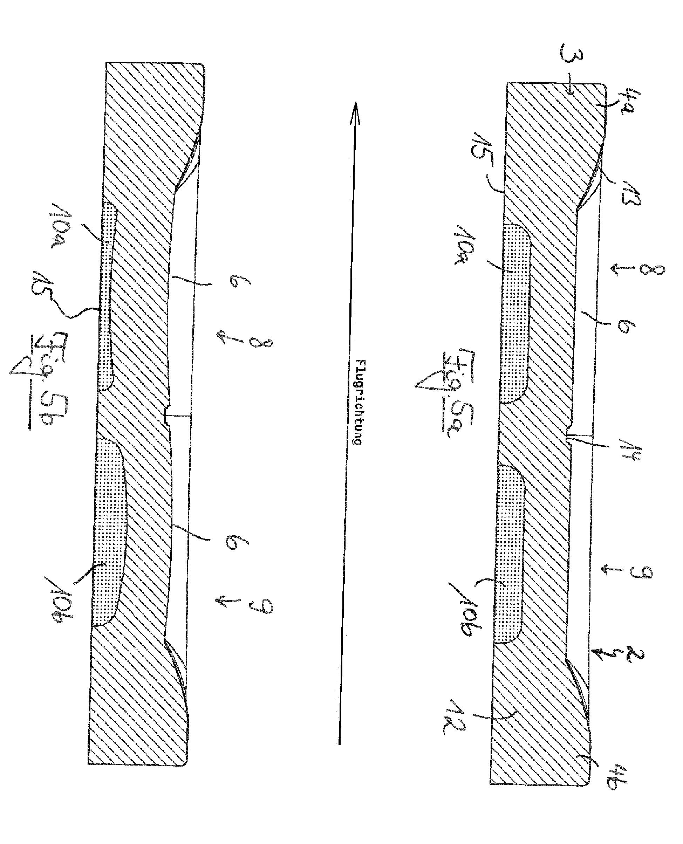

Die Figuren 5a und 5b zeigen einen Längsschnitt durch ein Sitzkissen einer weiteren Ausführungsform eines erfindungsgemäßen Flugzeugsitzes, welches der Ausführungsform von Figur 3 sehr ähnlich ist. Aus diesem Grunde wurden für gleiche Elemente auch gleiche Bezugszeichen verwendet.

Figur 5a zeigt das Sitzkissen 2, während sich das Flugzeug, welches den entsprechenden Flugzeugsitz trägt, am Boden befindet. Das Sitzkissen 2 befindet sich also in "neutraler Position", d. h., die beiden Ausgleichskissen 10a und 10b weisen die gleiche Höhe auf. Analog zu Figur 3 weist das Sitzkissen 2 einen Lederbezug 13 auf. Auch hier sind die Seitenbereiche 4a und 4b des wulstförmigen Rahmens 3 zu sehen, welche die Sitzfläche 6 umgeben und diese überragen, wobei der Rahmen 3 direkt in die Sitzfläche 6 übergeht Eine Mittelnaht 14 teilt die Sitzfläche 6 in eine rechte Hälfte 8 und eine linke Hälfte 9. Der Boden 15 des Sitzkissens 2 ist fest mit einer hier nicht dargestellten Trägerschale, welche ebenfalls Bestandteil des Sitzelementes ist, verbunden. Die Neigungsausgleichskissen 10a und 10b sind im unteren Bereich des Sitzkissens 2 in dieses integriert. Beide Neigungsausgleichskissen 10a und 10b sind mit Schaumstoff und Luft gefüllt.

Figur 5b zeigt die Situation im Sitzkissen während des Geradeausfluges des Flugzeuges. Bei der hier dargestellten Situation wurde aus dem in Flugrichtung befindlichen Ausgleichskissen 10a Luft abgesaugt. In das Ausgleichskissen 10b wurde hingegen Luft hineingepumpt. Durch das Absaugen des Ausgleichskissens 10a wurde erreicht, dass sich die Sitzfläche 6 im Bereich der rechten Hälfte 8 des Sitzkissens 2 etwas abgesenkt hat, wodurch der Abstand zwischen der Sitzfläche 6 und dem Boden 15 in der rechten Hälfte 8 des Sitzkissens 2 abgenommen hat. Durch das Aufpumpen des Sitzkissens 10b wurde erreicht, dass sich die Sitzfläche 6 im Bereich der linken Hälfte 9 des Sitzkissens 2 etwas angehoben hat und hier eine leichte Wölbung nach außen erfahren hat. Hierdurch wurde wiederum erreicht, dass die auf dem Sitz befindliche Person bei seitlicher Sitzstellung in einer geraden und aufrechten Position sitzt, obwohl der Anstellwinkel von 3° vorhanden ist.

Der Unterschied zur Ausführungsform von Figur 3 besteht insbesondere darin, dass hier beide Neigungsausgleichskissen Änderungen erfahren (Absaugen oder Aufpumpen). Durch den etwas flexibleren Schaumstoff bei der in Figur 5 gezeigten Ausführungsform im Vergleich zu der Ausführungsform von Figur 3 kommt es hier zu Wölbungen bzw. Einbuchtungen der Sitzfläche. Der erzielte Effekt ist bei beiden Ausführungsformen gleich. So wird bei beiden Ausführungsformen der beim Flug entstehende Anstellwinkel ausgeglichen.

Es versteht sich, dass der Flugzeugsitz, insbesondere der Bereich des Sitzkissens und der Neigungsausgleichskissen auch anders als in den Figuren dargestellt ausgebildet sein kann. So kann beispielsweise das Sitzkissen auch aus zwei Teilen bestehen, die lediglich durch den Sitzbezug miteinander verbunden sind. So ist es beispielsweise denkbar, dass das Sitzkissen aus zwei ursprünglich voneinander getrennten Schaumstoffteilen aufgebaut ist, welche durch den Sitzbezug miteinander verbunden sind, wobei die Mittelnaht beispielsweise die Stossflächen der beiden Teile bedeckt.

Ferner ist es denkbar, dass die Neigungsausgleichskissen im oberen Bereich des Sitzkissens angeordnet sind. Ferner ist es denkbar, dass die Neigungsausgleichskissen das Sitzkissen in seiner gesamten Breite ausfüllen und im oberen Bereich mit dem Bezug in Kontakt sind. Auch ist es denkbar, dass keine separaten Ausgleichskissen im Sitzkissen integriert sind, sondern dass das Sitzkissen selber Kammern aufweist, in welche Medium ein- und ausgebracht werden kann.

Ferner ist es denkbar, dass beim Absaugen eines Bereiches bzw. eines Ausgleichskissens die Neigung der Sitzfläche ohne Belastung noch keine oder nur unwesentliche Neigung erfährt und erst beim Belasten der Sitzfläche durch das Sitzen einer Person der abgesaugte Bereich tiefer einsinkt als der nicht abgesaugte Bereich und dadurch ein Neigungsausgleich stattfindet. Ob es bereits im unbelasteten Zustand zu einem Neigungsausgleich kommt, ist auch abhängig von dem im Sitzkissen befindlichen Material.

Ein noch schnellerer Neigungsausgleich wird erreicht, wenn - wie in Figur 3 gezeigtdas Neigungskissen 10a abgesaugt und gleichzeitig in das Neigungskissen 10b Medium, insbesondere Luft eingebracht wird.

Ferner ist es denkbar, dass aufblasbare Strukturen, wie beispielsweise Neigungsausgleichskissen unter dem Sitzkissen positioniert sind und beispielsweise beim Aufblasen gegen die Unterseite (Boden) des Sitzkissens drücken, wodurch das flexible Material im Sitzkissen nach oben gepresst wird, was wiederum eine entsprechende Erhöhung der Sitzfläche bewirkt

## Patentansprüche

1. Flugzeugsitz mit einem Sitzelement, welches ein flexibles Material aufweisendes und die Sitzfläche bildendes Sitzkissen umfasst, **dadurch gekennzeichnet, dass** im Bereich der linken oder rechten Hälfte des Sitzkissens (2) oder im Bereich beider Hälften des Sitzkissens unabhängig voneinander die Sitzhöhe mittels Einbringen von Medium in das Sitzelement und/oder Ablassen von Medium aus dem Sitzelement veränderbar ist.

2. Flugzeugsitz nach Anspruch 1, **dadurch gekennzeichnet, dass** im oder unter dem Sitzkissen (2) mindestens ein, vorzugsweise zwei mit Medium, insbesondere Luft befüllbare und/oder absaugbare Neigungsausgleichskissen (10a, 10b) angeordnet sind, welche vorzugsweise im Bereich der linken bzw. rechten Hälfte des Sitzkissens (2) positioniert sind.

3. Flugzeugsitz nach Anspruch 2, **dadurch gekennzeichnet, dass** das bzw. die Neigungsausgleichskissen (10a, 10b) jeweils einen Pneumatikanschluss (11a, 11b) zum Absaugen und/oder Einbringen von Luft aufweisen.

4. Flugzeugsitz nach einem der vorhergehenden Ansprüche, **dadurch gekennzeichnet, dass** das flexible Material des Sitzkissens (2) Schaumstoff (12) ist.

5. Flugzeugsitz nach einem der Ansprüche 2 oder 3, **dadurch gekennzeichnet, dass** die Neigungsausgleichskissen (10a, 10b) flexibles Material, vorzugsweise Schaumstoff enthalten.

6. Flugzeugsitz nach einem der vorhergehenden Ansprüche, **dadurch gekennzeichnet, dass** das Absaugen und/oder Einbringen von Medium automatisch durch eine Steuereinrichtung gesteuert wird, wobei vorzugsweise Sensoren im Sitz (1) angeordnet sind, welche die Stellung, insbesondere Drehstellung des Sitzes erkennen.

7. Flugzeugsitz nach Anspruch 6, **dadurch gekennzeichnet, dass** während eines Fluges bei einer Stellung des Sitzes, bei der die Blickrichtung einer auf dem Sitz sitzenden Person mit der Flugrichtung einen im Wesentlichen rechten Winkel einschließt, die Drücke im Sitzkissen derart automatisch eingestellt werden, dass die Schräglage der Sitzfläche (Anstellwinkel) ausgeglichen wird.

8. Verfahren zum Ausgleichen einer durch den Anstellwinkel eines Flugzeuges während eines Fluges hervorgerufenen schiefen Sitzposition bei seitlicher Sitzstellung, wobei mittels Einbringen und/oder Ablassen von Medium in ein bzw. aus einem Sitzelement des Flugzeugsitzes in einem linken Bereich (9) der Sitzfläche des Flugzeugsitzes eine andere Sitzhöhe als in einem rechten Bereich (8) erzeugt wird.

9. Verfahren nach Anspruch 8, **dadurch gekennzeichnet, dass** in einem linken Bereich (9) der Sitzfläche (6) und/oder in einem rechten Bereich (8) der Sitzfläche jeweils ein Neigungsausgleichskissen (10a, 10b) angeordnet ist, wobei aus demjenigen Neigungsausgleichskissen (10a), welches sich in Flugrichtung vorne befindet, Medium, insbesondere Luft abgesaugt wird, und/oder wobei in dasjenige Neigungsausgleichskissen (10b), welches sich nicht in Flugrichtung befindet, Medium, insbesondere Luft hineingepumpt wird.

10. Verfahren nach einem der Ansprüche 8 oder 9, **dadurch gekennzeichnet, dass** der Ausgleich automatisch erfolgt, indem die Sitzstellung durch Sensoren detektiert wird und je nach Sitzstellung entweder die linke Sitzhälfte (9) oder die rechte Sitzhälfte (8) bzw. das linke Neigungsausgleichskissen (10b) oder das rechte Neigungsausgleichskissen (10a) angesteuert wird.
